# NEUE EUROPÄISCHE PATENTSCHRIFT

(11) **EP 2 133 017 B2**
(45) Veröffentlichungstag und Bekanntmachung des Hinweises auf die Entscheidung über den Einspruch: **02.09.2020**
(45) Hinweis auf die Patenterteilung: 08.01.2014
(21) Anmeldenummer: 09160485.0
(22) Anmeldetag: 18.05.2009
(51) Int. Cl.: A47L 9/14

(54) **Filterbeutel**
Filter bag
Sac filtrant

(30) Priorität: 10.06.2008 DE 202008007717 U
(43) Veröffentlichungstag der Anmeldung: 16.12.2009
(73) Patentinhaber: Wolf PVG GmbH & Co. Kommanditgesellschaft, 32602 Vlotho-Exter (DE)
(72) Erfinder: Rosemeier, Brigitte, 32602 Vlotho (DE); Czado, Wolfgang, 32429 Minden (DE)
(74) Vertreter: Dantz, Jan Henning

(56) Entgegenhaltungen:
- EP-A2- 0 161 790
- WO-A1-96/32878
- DE-A1-102005 059 214
- DE-U1-202005 009 452
- DE-U1-202008 003 248

## Beschreibung

Die vorliegende Erfindung betrifft einen Filterbeutel, insbesondere für Staubsauger, mit einer ersten Filtermateriallage mit einer Einströmöffnung und einer zweiten Filtermateriallage, die randseitig mit der ersten Filtermateriallage zur Ausbildung eines Innenraumes verbunden ist, wobei in dem Innenraum eine zumindest teilweise mit der ersten und/oder zweiten Filtermateriallage verbundene flächenförmige mehrlagige Filtereinlage angeordnet ist.

Aus der DE 20 2005 009 945 2U ist ein Staubsaugerbeutel bekannt, bei dem eine obere Filtermateriallage randseitig mit einer unteren Filtermateriallage verschweißt ist. An einer Filtermateriallage ist eine Einströmöffnung ausgebildet, wobei auf der zur Einströmöffnung gegenüberliegenden Seite ein Kissen vorgesehen ist, das Adsorptionsmaterial zur Vermeidung unangenehmer Gerüche aufweist. Wird ein solcher Staubsaugerbeutel mit Staub beladen, werden die Filtermateriallagen durch Staub verstopft, so dass es zu einem Abfall des Volumenstroms und damit zu einem Abfall der Saugleistung kommt.

Um das Staubspeichervermögen eines Staubsaugerbeutels zu verbessern, ist aus der DE 20 2006 016 303 U ein Filterbeutel bekannt, bei dem im Beutelinnenraum eine Trennwand angeordnet ist, an der sich ein Teil des eingesaugten Staubes absetzen kann. Dadurch werden die Filtermateriallagen an den Außenwänden des Staubsaugerbeutels weniger stark mit Staub zugesetzt. Zwar lässt sich eine Trennwand aus flächigem Filtermaterial mit begrenztem Aufwand während des Herstellungsprozesses in den Staubsaugerbeutel integrieren, allerdings die Staubspeicherfähigkeit einer Trennwand zur Unterteilung des Staubsaugerbeutels begrenzt.

Die DE 20 2008 003 248 U offenbart einen Staubsaugerbeutel bei dem im Innenraum ein Ablenkstreifen, ein Materialstreifen und ein Materialstück vorgesehen sind. Der Materialstreifen ist dabei zumindest teilweise mit der Beutelwandung unverbunden und kann aus einem luftdurchlässigem Material bestehen.

Es ist daher Aufgabe der vorliegenden Erfindung einen Filterbeutel, insbesondere für Staubsauger zu schaffen, der ein besonders großes Staubspeichervermögen besitzt und dessen äußere Filtermateriallagen möglichst wenig bei der Befüllung mit Staub zugesetzt werden.

Diese Aufgabe wird mit einem Filterbeutel mit den Merkmalen des Anspruches 1 gelöst.

Erfindungsgemäß weist die Filtereinlage mindestens zwei Außenschichten auf, zwischen denen zur Beladung mit Staub eine Mittelschicht vorgesehen ist. Dadurch kann im Gebrauch die staubbeladene Luft in die Filtereinlage eingeblasen werden, so dass sich der Staub in der Mittelschicht ansammeln kann und dort vorgefiltert wird. Sämtlicher Staub, der sich in der Filtereinlage ablagert, kann die äußeren Filtermateriallagen des Filterbeutels nicht mehr verstopfen. Insofern wird bei zunehmender Befüllung des Filterbeutels mit Staub zunächst die Filtereinlage mit Staub gefüllt, so dass die äußeren Filtermateriallagen weniger stark verstopfen und dadurch der Volumenstromabfall bei gleicher Saugleistung gering ausfällt. Bei weiterer Staubeinlagerung in den weicheren Kern wird dieser geweitet und bei weiterer Staubbeladung auch unter Zerstörung des Kerns sogar auseinandergerissen, so dass die beiden festeren Außenschichten auseinanderdrängt werden und sich automatisch aus der vormals flachen Filtereinlage eine dreidimensionale, beutelartige Form ausbildet. Da die Filtereinlage zunächst flächenförmig ausgebildet ist, kann Sie in einem Herstellungsverfahren auf einfache Weise in den Filterbeutel integriert werden.

Die Außenschicht weist dabei auf der zur Einströmöffnung zugewandten Seite mindestens eine Öffnung zum Einströmen staubbeladener Luft in die Mittelschicht auf.

Die Filtereinlage weist eine Mittelschicht auf, die an gegenüberliegenden Seiten von je einer Außenschicht mit höherer Festigkeit umgeben ist. Die Außenschichten können beispielsweise eine um 50% höhere Zugfestigkeit als die Mittelschicht aufweisen, so dass sichergestellt ist, dass die Außenschichten nicht versehentlich bei der Beladung der Mittelschicht mit Staub beschädigt werden. Dabei kann die Kraft zum Ablösen einer Außenschicht von der Mittelschicht oder der anderen Außenschicht größer als 2N bei einem 20 mm breiten Probenkörper sein.

Gemäß einer bevorzugten Ausgestaltung der Erfindung ist die Filtereinlage aus einem mehrlagigen Vliesstoff gebildet. Dieser Vliesstoff kann ein beidseitig geglättetes Vlies mit weicherem Kern sein, so dass die volumige flauschige Mittelschicht als Staubspeicher eingesetzt wird.

Die Öffnung auf der zur Einströmöffnung gewandten Seite einer Außenschicht kann durch eine Sollbruchstelle gebildet sein, die im Gebrauch aufreißt. Dadurch kann die Filtereinlage bis zum Gebrauch unversehrt bleiben, wobei die Sollbruchstelle ein gezieltes Öffnen der Außenschicht auf der zur Einströmöffnung gewandten Seite ermöglicht. Alternativ können mehrere kleinere Öffnungen in der Außenschicht gebildet sein, die ein Einströmen der staubbeladenen Luft in die Filtereinlage ermöglichen. Es ist auch möglich, die Außenschicht auf der zur Einströmöffnung gewandten Seite mit Austanzungen, Schlitzen oder anderen Öffnungen zu versehen, die ein Einströmen in die Filtereinlage gewährleisten.

Gemäß einer weiteren Ausgestaltung umfasst der Filterbeutel eine Filtereinlage aus einem Spunbond, dessen Außenseiten thermisch verfestigt sind. Die Verfestigung der Außenschichten kann nass, chemisch, thermisch, mechanisch, per Nadeln oder durch Wasserstrahl erfolgen. Zudem können die Außenschichten auch eine perforierte Folie, oder andere flächenförmige Materialien aufweisen.

Vorzugsweise weisen die Außenschichten eine größere Luftdurchlässigkeit auf als die Filtermateriallagen. Dadurch bilden die Außenschichten der Filtereinlage eine Art Vorfilter aus, während die Filtermateriallagen zumindest eine Schicht aufweisen, die als Feinfilter dient und sehr kleine Partikel herausfiltern kann.

Damit die Filtereinlage ausreichend Staubspeichervolumen besitzt, kann die Mittelschicht mindestens dreimal, vorzugsweise mindestens fünf mal so dick sein wie eine Außenschicht. Ferner kann die Mittelschicht eine Dicke von mehr als 2 mm, vorzugsweise mehr als 4 mm aufweisen.

Für eine einfache Befestigung der Filtereinlage in dem Filterbeutel kann die Filtereinlage an mindestens einer Naht zwischen erster und zweiter Filtermateriallage festgelegt sein. Denn die beiden Filtermateriallagen werden zumindest an einer Seite, gegebenenfalls auch an allen vier Seiten durch eine Naht, vorzugsweise eine Schweißnaht miteinander verbunden. Wenn bei der Herstellung dieser Naht gleichzeitig auch die Filtereinlage fixiert wird, muss zur Fixierung der Filtereinlage kein gesonderter Befestigungsvorgang durchgeführt werden. Vorzugsweise kann die Filtereinlage dabei an drei oder vier Seitennähten zwischen erster und zweiter Filtermateriallage festgelegt sein.

Gemäß einer weiteren Ausgestaltung der Erfindung ist die Filtereinlage mit der ersten Materiallage in einem Bereich benachbart zu der Einströmöffnung verbunden. Dies gewährleistet, dass die Filtereinlage nicht nur auf eine Filtermateriallage durch den eintretenden Volumenstrom gedrückt wird, sondern lose in dem Innenraum des Filterbeutels hängt, da auf einer Seite eine Festlegung an der ersten Filtermateriallage benachbart zu der Einströmöffnung vorliegt und an der gegenüberliegenden Seite eine Verbindung mit einer Naht im Seitenbereich der ersten und zweiten Filtermateriallage vorgenommen werden kann. Dadurch hängt die Filtereinlage lose innerhalb des Filterbeutels.

Um die Filtereinlage in einem laufenden Produktionsprozess effektiv in dem Filterbeutel fixieren zu können, kann die Filtereinlage als durchgehender Streifen ausgebildet sein, der endseitig jeweils an einer Naht zwischen erster und zweiter Filtermateriallage festgelegt ist.

Die Erfindung wird nachfolgend anhand mehrerer Ausführungsbeispiele mit Bezug auf die beigefügten Zeichnungen näher erläutert. Es zeigen:
- Figuren 1 A und 1 B: zwei Ansichten eines ersten Ausführungsbeispieles eines erfindungsgemäßen Filterbeutels;
- Figur 2: eine Detailansicht der Filtereinlage des Filterbeutels der Figur 1;
- Figuren 3A bis 3C: mehrere Ansichten eines zweiten Ausführungsbeispieles eines erfindungsgemäßen Filterbeutels;
- Figuren 4A bis 4C: mehrere Ansichten eines dritten Ausführungsbeispiels eines erfindungsgemäßen Filterbeutels, und
- Figur 5: ein Diagramm zu dem Volumenstromabfall eines erfindungsgemäßen Filterbeutels.

Ein Filterbeutel 1 umfasst eine erste obere Filtermateriallage 2, an der eine Einströmöffnung 4 ausgebildet ist. Die erste Filtermateriallage 2 ist randseitig umlaufend mit einer zweiten Filtermateriallage 3 verbunden, vorzugsweise über eine Schweißnaht. Die Filtermateriallagen 2 und 3 können aus einem mehrlagigen Vliesstoff gebildet sein, der mindestens eine Feinfilterschicht aufweist, beispielsweise durch eine Schicht Meltblown.

Um die Einströmöffnung 4 ist eine Halteplatte 5 vorgesehen, mittels der der Filterbeutel 1 an einem Staubsauger festlegbar ist. Zwischen der ersten Filtermateriallage 2 und der zweiten Filtermateriallage ist ein Innenraum 6 ausgebildet, in dem sich im Betrieb Staub ansammeln kann.

Um das Staubspeichervermögen des Filterbeutels 1 zu erhöhen, ist eine Filtereinlage 7 in dem Innenraum 6 angeordnet, die vollflächig auf der zweiten Filtermateriallage 3 aufliegt und randseitig an der Naht zwischen erster Filtermateriallage 2 und zweiter Materiallage 3 festgelegt ist.

Die Filtereinlage 7 weist auf der zu der Einströmöffnung 4 gewandten Seite mindestens eine Öffnung 8 auf, die in einer Außenschicht 9 der Filtereinlage gebildet ist. Die Filtereinlage 7 weist eine Filterschicht 10 auf, die an gegenüberliegenden Seiten von einer Außenschicht 9 bzw. 11 umgeben ist. Die Außenschichten 9 und 11 weisen eine höhere Festigkeit als die dickere Mittelschicht 10 auf.

Im Betrieb kann einströmende Luft durch die Einströmöffnung 4 in den Innenraum 6 gelangen und trifft dort auf die Außenschicht 9 der Filtereinlage 7 auf. Im Bereich des Auftreffens des Luftstromes sind ein oder mehrere Öffnungen 8 vorgesehen, die ein Einströmen der eintretenden Luft in die Filtereinlage 7 ermöglichen. Dadurch wird ein Innenraum 19 in der Filtereinlage 7 mit Staub befüllt, der der durch das Material der Mittelschicht 10 dort gesammelt wird. Die Filtereinlage 7 bildet somit einen Vorfilter, der einen Teil des Staubes sammelt, so dass sich dieser nicht in den Filtermateriallagen 2 und 3 absetzen kann. Das der staubbeladene Luftstrom dringt in die weichere Mittelschicht 10 ein und Staub lagert sich in der Filtereinlage 7 ab, wodurch dich die Mittelschicht 10 weitet. Bei weiterer Staubbeladung der Mittelschicht 10 kann die Filtereinlage 7 sogar auseinanderreißen und dabei die beiden festeren Außenschichten 9 und 11 auseinanderdrängt, so das sich automatisch aus der einen flächigen Filtereinlage eine dreidimensionale, beutelartige Form ausbildet.

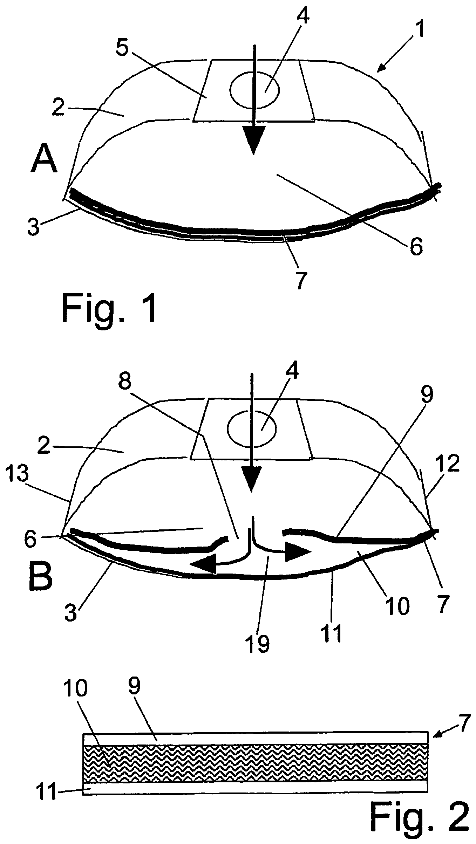

In Figur 2 ist die Filtereinlage 7 im Schnitt dargestellt. Eine dickere Mittelschicht 14 ist von zwei Außenschichten 9 und 11 umgeben. Die Mittelschicht 10 weist dabei eine Dicke von mindestens 2 mm, vorzugsweise 4 bis 10 mm auf. Die Mittelschicht kann aus einem weichen flauschigen Material, vorzugsweise einem Spinnvlies bestehen. Die Außenschichten 9 und 11 bestehen aus einem Material mit größerer Festigkeit als die Mittelschicht, beispielsweise können Vliesstoff eingesetzt werden, die verfestigt sind. Beispielsweise kann die Filtereinlage 7 dadurch hergestellt werden, dass ein Spinnvliesmaterial durch eine Prägekalander heiß verfestigt wird, so dass nur die Oberfläche des Spinnvlieses durch Plastifizierung und Verschmelzung von Fasern verfestigt wird, aber die Mittelschicht 10 weich und flauschig erhalten bleibt.

Um eine Öffnung 8 an der Außenschicht 9 vorzusehen, kann ein Schlitzen, Perforieren oder Stanzen erfolgen. Dabei kann auch eine Sollbruchstelle an der Außenschicht 9 vorgesehen werden, so dass im Gebrauch die Sollbruchstelle aufreist und eine Öffnung 8 ausbildet, damit die Filtereinlage 7 mit Staub beladen werden kann.

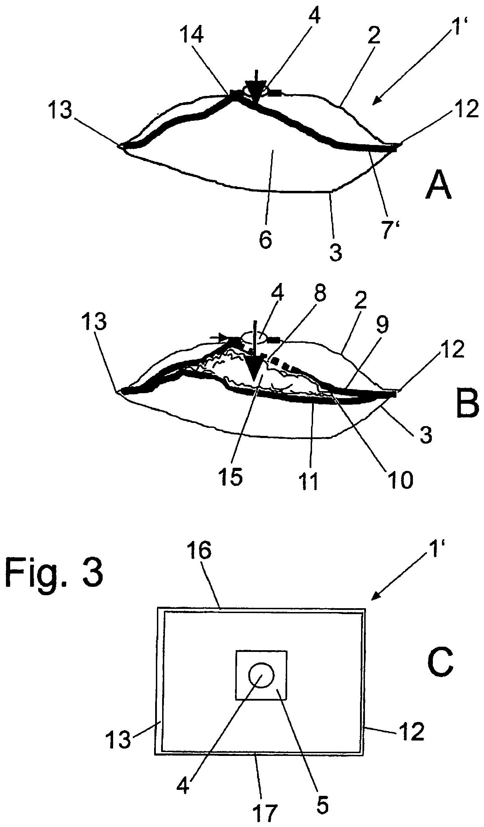

In den Figuren 3A bis 3C ist eine modifizierte Ausführungsform eines Filterbeutels 1' dargestellt. Zwischen den Filtermateriallagen 2 und 3 ist in einem Innenraum 6 eine Filtereinlage 7' vorgesehen, die an einer ersten Seite an einer Naht 12 in dem Verbindungsbereich der ersten Filtermateriallage 2 und der zweiten Filtermateriallage 3 festgelegt ist und an einer gegenüberliegenden Seite an einer Naht 13 der ersten und zweiten Filtermateriallage 2 und 3 festgelegt ist. Damit die Filtereinlage 7' nicht auf die untere Filtermateriallage 3 gedrückt wird, besitzt die Filtereinlage 7' zusätzlich eine Befestigungsstelle 14, beispielsweise eine Schweißnaht, die in einem mittleren Bereich der Filtermateriallage 2 angeordnet ist, und zwar in einem Bereich benachbart zu der Einströmöffnung 4. Dadurch wird erreicht, dass die Filtereinlage 7' lose in dem Innenraum 6 hängt, so dass die Filtereinlage 7' allseitig mit Luft umströmt werden kann.

In Figur 3B ist die Filtereinlage 7' im befüllten Zustand dargestellt. Die Filtereinlage 7' umfasst eine Außenschicht 9, an der ein oder mehrere Öffnungen 8 ausgebildet sind, so dass durch die Einströmöffnung 4 einströmende Luft die Öffnungen 8 durchtreten kann und sich im Bereich der Mittelschicht 10 Staub 15 ansammeln kann. Die Filtereinlage 7' wirkt als Vorfilter, so dass die Filtermateriallagen 2 und 3 nicht so schnell mit Staub verstopft werden.

In Figur 3C ist der Innenbereich des Filterbeutels 1' im Schnitt dargestellt, wobei die Nähte 12, 13, 16 und 17 zu sehen sind, an denen die erste Filtermateriallage 2 mit der zweiten Filtermateriallage 3 verbunden ist, vorzugsweise durch Ultraschallschweißen. Die Filtereinlage 7' erstreckt sich vollflächig in dem Filterbeutel 1' und besitzt in etwa dieselbe Größe wie eine der Filtermateriallagen 2 oder 3.

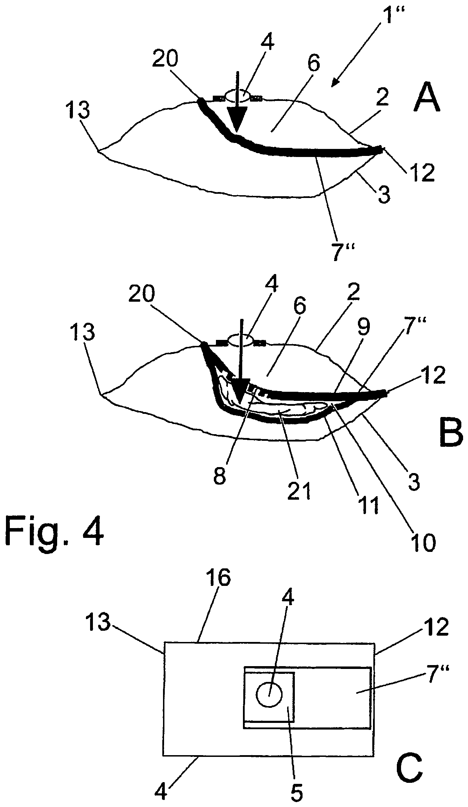

In Figuren 4A bis 4C ist eine weitere Ausführungsform eines erfindungsgemäßen Filterbeutels 1" gezeigt, eine Filtereinlage 7" in einem Innenraum 6 zwischen einer ersten Filtermateriallage 2 und einer zweiten Filtermateriallage 3 festgelegt ist.

Die Filtereinlage 7" weist eine geringere Größe als eine der Filtermateriallagen 2 oder 3 auf, wobei die Filtereinlage 7" an einer Naht 12 zwischen erster und zweiter Filtermateriallage 2 und 3 festgelegt ist. An der gegenüberliegenden Seite ist die Filtereinlage 7" an einer Naht 20 festgelegt, die benachbart zu der Einströmöffnung 4 angeordnet ist. An der Naht 20 ist die Filtereinlage 7" mit der Filtermateriallage 2 verbunden. Dadurch hängt die Filtereinlage 7" lose in dem Innenraum 6, so dass beide Außenschichten 9 und 11 mit Luft umspült werden können. Die Filtereinlage 7" besitzt eine deutlich geringere Größe als eine Filtermateriallage 2 oder 3, wie dies in Figur 4C zu sehen ist. Dadurch kann ein hohes Staubspeichervolumen erhalten werden, auch wenn der Materialeinsatz geringer ist. Auch hier kann der durch die Einströmöffnung 4 eintretende Luftstrom durch Öffnungen 8 in der Außenschicht 9 in die Filtereinlage 7" strömen, so dass sich Staub 21 in einer Mittelschicht 10 der Filtereinlage 7" ansammeln kann und somit nicht mehr die Filtermateriallagen 2 und 3 verstopfen kann.

Bei den vorangegangenen Ausiuhrungsbeispielen dient die Filtereinlage 7, 7', 7" als eine Art Vorfilter, wobei die Außenschichten 9 und 11 eine größere Luftdurchlässigkeit besitzen als die Filtermateriallagen 2 und 3. Die Form der Filtereinlage 7 kann in weiten Bereichen frei gestaltet werden, solange die einströmende Luft in die Filtereinlage einströmen kann und sich Staub in einer Mittelschicht 10 festsetzt.

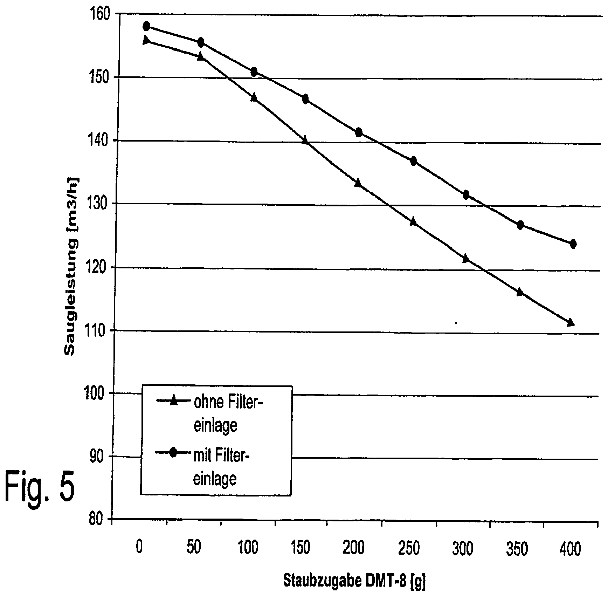

In Figur 5 ist ein Diagramm gezeigt, bei dem die Saugleistung im Hinblick auf die Befüllung eines Staubsaugerbeutels dargestellt ist. In einem Staubsauger wird ein erster Staubbeutel ohne Filtereinlage eingelegt. Der Staubsauger wird mit einer bestimmten Leistung betrieben und bei zunehmender Befüllung des Staubsaugerbeutels mit Staub wird der Saugvolumenstrom gemessen. Der eingesetzte Staubsaugerbeutel besteht aus fünflagigem Vliesmaterial, das eine Lage Spunbond 15 g/m², eine Lage Volumenvlies 55 g/m², eine Lage Spunbond 15 g/m², eine Lage Meltblown 25 g/m² und eine Lage Spunbond 25 g/m² aufweist,

Als Vergleich wurde ein Staubsaugerbeutel mit den obigen Materialien zusätzlich auf der Beutelunterseite im Innenraum mit einer Filtereinlage versehen, die ein teilverfestigtes Spunbond mit ca. 60 g/m² Flächengewicht ist und an allen vier Seiten mit den Nähten des Filterbeutels verschweißt ist (Figur 1A).

In Figur 5 ist der Abfall des Volumenstroms bei dem Staubsaugerbeutel ohne Filtereinlage deutlich größer als bei Ergänzung der Filtereinlage entsprechend der vorliegenden Erfindung.

Die Filtereinlage kann aus einem beidseitig geglättetem Vlies mit weicherem Kern sein, oder aus zwei oder mehreren miteinander verbundene Vliesen bestehen. Als Vliese können Spinnvlies, Spunbond, Meltblow, Krempelvliesen (naß, chemisch, thermisch, mechanisch per nadeln oder Wasserstrahl verfestigt), Schaumgummi, perforierter Folie, Gittergelegen, Glas oder Mineralwolle oder Kombinationen daraus verwendet werden.

Ferner können für die Filtereinlage auch Kombinationen aus mindestens zwei luftdurchlässigen Vliesen mit einer Durchlässigkeit von mindestens 100 1/qxs verwendet werden, wobei die Vliese leicht miteinander verbunden sind und die Kraft zum trennen der beiden Vliese größer 2N bei 20mm breiten Probenkörpern ist. Bei einem mindestens dreilagigem Aufbau weisen die äußeren Vliese eine um 50% höhere Festigkeit auf als ein mittleres Vliesmaterial.

## Patentansprüche

1. Filterbeutel (l) insbesondere für Staubsauger, mit einer ersten Filtermateriallage (2) mit einer Einströmöffnung (4) und einer zweiten Filtermateriallage (3), die randseitig mit der ersten Filtermateriallage (2) zur Ausbildung eines Innenraumes (6) verbunden ist, wobei in dem Innenraum (6) eine zumindest teilweise mit der ersten und/oder zweiten Filtermateriallage verbundene flächenförmige mehrlagige Filtereinlage (7, 7', 7") angeordnet ist, wobei die Filtereinlage (7, 7', 7") mindestens zwei Außenschichten (9, 11) aufweist, zwischen denen zur Beladung mit Staub eine Mittelschicht (10) vorgesehen ist, **dadurch gekennzeichnet, dass** die Außenschicht (9) auf der zur Einströmöffnung (4) zugewandten Seite mindestens eine Öffnung (8) zum Einströmen staubbeladener Luft in die Mittelschicht (10) aufweist, wobei der staubbeladene Luftstrom in die weichere Mittelschicht (10) eindringt und der Staub sich in der Filtereinlage (7, 7', 7") ablagert, wodurch sich die Mittelschicht (10) weitet, wobei bei weiterer Staubbeladung der Mittelschicht (10) die Filtereinlage (7, 7', 7") sogar auseinanderreißen kann und dabei die beiden festeren Außenschichten (9, 11) auseinanderdrängt, so dass sich automatisch aus der flächigen Filtereinlage eine dreidimensionale, beutelartige Form ausbildet.

2. Filterbeutel nach Anspruch 1, **dadurch gekennzeichnet, dass** die Außenschichten (9, 11) eine um 50% höhere Zugfestigkeit als die Mittelschicht (10) aufweisen.

3. Filterbeutel nach Anspruche 1 oder 2, **dadurch gekennzeichnet, dass** die Filtereinlage (7, 7', 7") aus einem mehrlagigen Vliesstoff gebildet ist.

4. Filterbeutel nach einem der Ansprüche 1 bis 3, **dadurch gekennzeichnet, dass** die Öffnung (8) durch eine Sollbruchstelle gebildet ist, die im Gebrauch aufreißt.

5. Filterbeutel nach einem der Ansprüche 1 bis 4, **dadurch gekennzeichnet, dass** mehrere kleine Öffnungen (8) in der Außenschicht (9) gebildet sind.

6. Filterbeutel nach einem der Ansprüche 1 bis 5, **dadurch gekennzeichnet, dass** die Filtereinlage (7, 7', 7") durch einen Spinnvlies gebildet ist, dessen Außenseiten thermisch verfestigt sind.

7. Filterbeutel nach einem der Ansprüche 1 bis 6, **dadurch gekennzeichnet, dass** die Filtereinlage (7, 7', 7") mindestens zwei Schichten aus einem luftdurchlässigen Material mit einer Durchlässigkeit von mindestens 100 1/qxs aufweist, wobei die Schichten miteinander verbunden sind und bei Befüllung auseinandergedrückt werden.

8. Filterbeutel nach einem der Ansprüche 1 bis 7, **dadurch gekennzeichnet, dass** die Außenschichten (9, 11) eine größere Luftdurchlässigkeit aufweisen als die Filtermateriallage (2, 3).

9. Filterbeutel nach einem der Ansprüche 1 bis 8, **dadurch gekennzeichnet, dass** die Mittelschicht (10) mindestens dreimal, vorzugsweise mindestens fünfmal so dick wie eine Außenschicht (9, 11) ist.

10. Filterbeutel nach einem der Ansprüche 1 bis 9, **dadurch gekennzeichnet, dass** die Mittelschicht (10) eine Dicke von mehr als 2 mm, vorzugsweise mehr als 4 mm auf weist.

11. Filterbeutel nach einem der Anspruche 1 bis 10, **dadurch gekennzeichnet, dass** die Filtereinlage (7, 7', 7") an mindestens einer Naht (12, 13, 16, 17) zwischen erster und zweiter Materiallage (2, 3) festgelegt ist.

12. Filterbeutel nach einem der Ansprüche 1 bis 11, **dadurch gekennzeichnet, dass** die Filtereinlage (7, 7') an drei oder vier Nähten (12, 13, 16, 17) zwischen erster und zweiter Filtermateriallage (2, 3) festgelegt ist.

13. Filterbeutel nach einem der Ansprüche 1 bis 12, **dadurch gekennzeichnet, dass** die Filtereinlage (7, 7") mit der ersten Filtermateriallage (2) in einem Bereich benachbart zu der Einströmöffnung (4) verbunden ist.

14. Filterbeutel nach einem der Ansprüche 1 bis 13, **dadurch gekennzeichnet, dass** die Filtereinlage (7, 7') als durchgehender Streifen ausgebildet ist, der endseitig jeweils an einer Naht (12, 13) zwischen erster und zweiter Filtermateriallage (2, 3) festgelegt ist.

## Claims

1. Filter bag (1), particularly for vacuum cleaners, with a first filter material layer (2) with an inflow opening (4) and a second filter material layer (3), which is connected at the edge with the first filter material layer (2) to form an interior space (6), wherein an areal multilayer filter insert (7, 7', 7") at least partly connected with the first and/or second filter material layer is arranged in the interior space (6), wherein the filter insert (7, 7', 7' ') has at least two outer layers (9, 11), between which a middle layer (10) is provided for charging with dust, **characterised in that** the outer layer (9) has on the side facing the inflow opening (4) at least one opening (8) for the inflow of dust-laden air into the middle layer (10), wherein the dust-laden air enters into the softer middle layer (10) and the dust accumulates in the filter insert (7, 7', 7") so that the middle layer (10) widens, whereby, in the case of further loading with dust, the middle layer (10) can even tear apart the filter insert (7, 7', 7") and force apart the two stronger outer layers (9, 11) so that the planar filter insert automatically forms a three-dimensional, bag-shaped shape.

2. Filter bag according to claim 1, **characterised in that** the outer layers (9, 11) have a tensile strength higher by 50% than the middle layer (10).

3. Filter bag according to claim 1 or 2, **characterised in that** the filter insert (7, 7', 7' ') is formed from a multilayer non-woven material.

4. Filter bag according to any one of claims 1 to 3, **characterised in that** the opening (8) is formed by a frangible location which in use is torn out.

5. Filter bag according to any one of claims 1 to 4, **characterised in that** a plurality of small openings (8) is formed in the outer layer (9).

6. Filter bag according to any one of claims 1 to 5, **characterised in that** the filter insert (7, 7', 7' ') is formed by a spunbonded fabric, the outer sides of which are thermally solidified.

7. Filter bag according to any one of claims 1 to 7, **characterised in that** the filter insert (7, 7', 7' ') has at least two layers of an air permeable material with a permeability of at least 100 l/qxs, wherein the layers are connected together and are forced apart at the time of filling.

8. Filter bag according to any one of claims 1 to 7, **characterised in that** the outer layers (9, 11) have a higher level of air permeability than the filter material layer (2, 3).

9. Filter bag according to any one of claims 1 to 8, **characterised in that** the middle layer (10) is at least three times, preferably at least five times, as thick as an outer layer (9, 11).

10. Filter bag according to any one of claims 1 to 9, **characterised in that** the middle layer (10) has a thickness of more than 2 mm, preferably more than 4 mm.

11. Filter bag according to any one of claims 1 to 10, **characterised in that** the filter insert (7, 7', 7' ') is fixed at at least one seam (12, 13, 16, 17) between first and second material layers (2, 3).

12. Filter bag according to any one of claims 1 to 11, **characterised in that** the filter insert (7, 7') is fixed at three or four seams (12, 13, 16, 17) between first and second filter material layers (2, 3).

13. Filter bag according to any one of claims 1 to 12, **characterised in that** the filter insert (7, 7") is connected with the first filter material layer (2) in a region adjacent to the inflow opening (4).

14. Filter bag according to any one of claims 1 to 13, **characterised in that** the filter insert (7, 7') is formed as a continuous strip which is fixed at each end at a seam (12, 13) between first and second filter material layers (2, 3).

## Revendications

1. Sac filtrant (1) en particulier pour aspirateur comportant une première couche de matériau filtrant (2) avec une ouverture d'entrée (4) et une seconde couche de matériau filtrant (3) qui est reliée latéralement à la première couche de matériau filtrant (2) pour former une chambre interne (6), cette chambre interne (6) étant équipée d'une garniture filtrante plane multicouches (7, 7', 7") reliée au moins partiellement à la première et/ou à la seconde couche de matériau filtrant, cette garniture filtrante (7, 7', 7") comportant au moins deux couches externes (9, 11) entre lesquelles est prévue une couche médiane (10) ou une chambre intermédiaire destinée à être chargée en poussière,
**caractérisé en ce que**
la couche externe (9) comporte, sur sa face tournée vers l'ouverture d'entrée (4), au moins une ouverture (8) permettant l'introduction d'air chargé de poussière dans la couche médiane (10) dans lequel l'air chargé de poussière pénètre dans la couche médiane (10) plus douce et la poussière s'accumule dans la garniture filtrant (7, 7', 7") de sorte que la couche médiane (10) s'élargisse, de sorte que dans le cas de de poussière, la couche médiane (10) peut même déchirer la garniture filtrant (7, 7', 7") et séparez les deux couches externes (9, 11) les plus solides de sorte que la garniture filtrant plan forme automatiquement une forme tridimensionnelle en forme de sac.

2. Sac filtrant conforme à la revendication 1,
**caractérisé en ce que**
les couches externes (9, 11) présentent une résistance à la traction de 50 % supérieure à celle de la couche médiane (10).

3. Sac filtrant selon la revendication 1 ou 2,
**caractérisé en ce que**
la garniture filtrante (7, 7', 7") est formée par un matelas de fibres multicouches.

4. Sac filtrant conforme à l'une des revendications 1 à 3,
**caractérisé en ce que**
l'ouverture (8) est formée par une ligne de rupture de consigne qui se déchire en cours d'utilisation.

5. Sac filtrant conforme à l'une des revendications 1 à 4,
**caractérisé en ce que**
plusieurs petites ouvertures (8) sont formées dans la couche externe (9).

6. Sac filtrant conforme à l'une des revendications 1 à 5,
**caractérisé en ce que**
la garniture filtrante (7, 7', 7") est formée par une nappe filée dont les faces externes sont consolidées par traitement thermique.

7. Sac filtrant conforme à l'une des revendications 1 à 6,
**caractérisé en ce que**
la garniture filtrante (7, 7', 7") comporte au moins deux couches d'un matériau perméable à l'air ayant une perméabilité d'au moins 100 l/qxs, ces couches étant reliées entre elles et comprimées l'une contre l'autre lors du remplissage.

8. Sac filtrant conforme à l'une des revendications 1 à 7,
**caractérisé en ce que**
les couches externes (9, 11) présentent une perméabilité à l'air supérieure à celle de la couche de matériau filtrant (2, 3).

9. Sac filtrant conforme à l'une des revendications 1 à 8,
**caractérisé en ce que**
la couche médiane (10) est au moins trois fois et de préférence au moins cinq fois plus épaisse qu'une couche externe (9, 11).

10. Sac filtrant conforme à l'une des revendications 1 à 9,
**caractérisé en ce que**
la couche médiane (10) présente une épaisseur supérieure à 2 mm et de préférence supérieure à 4 mm.

11. Sac filtrant conforme à l'une des revendications 1 à 10,
**caractérisé en ce que**
la garniture filtrante (7, 7', 7") est fixée sur au moins une couture (12, 13, 16, 17) entre la première et la seconde couche de matériau filtrant (2, 3).

12. Sac filtrant conforme à l'une des revendications 1 à 11,
**caractérisé en ce que**
la garniture filtrante (7, 7') fixée sur trois ou quatre coutures (12, 13, 16, 17) entre la première et la seconde couche de matériau filtrant (2, 3).

13. Sac filtrant conforme à l'une des revendications 1 à 12,
**caractérisé en ce que**
la garniture filtrante (7, 7") est reliée à la première couche de matériau filtrant (2) dans une zone voisine de l'ouverture d'entrée (4).

14. Sac filtrant conforme à l'une des revendications 1 à 13,
**caractérisé en ce que**
la garniture filtrante (7, 7') est réalisée sous la forme d'une bande continue qui est fixée respectivement à ses extrémités sur une couture (12, 13) entre la première et la seconde couche de matériau filtrant (2, 3).
